(19) Europäisches Patentamt
European Patent Office
Office européen des brevets

(11) EP 3 858 880 A1

# (12) EUROPEAN PATENT APPLICATION

published in accordance with Art. 153(4) EPC

(43) Date of publication:
**04.08.2021 Bulletin 2021/31**

(21) Application number: **19866832.9**

(22) Date of filing: **20.08.2019**

(51) Int Cl.:
***C08F 290/06*** (2006.01) ***E04G 23/02*** (2006.01)

(86) International application number:
**PCT/JP2019/032364**

(87) International publication number:
**WO 2020/066364 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2018 JP 2018182973**

(71) Applicant: **Showa Denko K.K.**
**Tokyo 105-8518 (JP)**

(72) Inventors:
- **UMINO, Atsushi**
  **Tokyo 105-8518 (JP)**
- **NIIBAYASHI, Ryota**
  **Tokyo 105-8518 (JP)**

(74) Representative: **Strehl Schübel-Hopf & Partner**
**Maximilianstrasse 54**
**80538 München (DE)**

# (54) RADICAL POLYMERIZABLE RESIN COMPOSITION AND STRUCTURE REPAIRING MATERIAL

(57) Provided are a radical-polymerizable resin composition and a structure repairing material which, when used for repairing concrete structures, enable construction working even in a low-temperature environment, achieve a high strength and a low shrinkage by curing, and prevent cracking. The radical-polymerizable resin composition contains a radical-polymerizable resin (A) containing at least one selected from the group consisting of a vinyl ester resin, an urethane (meth)acrylate resin, and a polyester (meth)acrylate resin, a radical-polymerizable monomer (B) containing an isobornyl group-having unsaturated compound (B1), and a hydroxy group-containing aromatic tertiary amine (C) represented by the general formula (I), and containing the radical-polymerizable resin (A) and the radical-polymerizable monomer (B) in a total amount of 75% by mass or more. The structure repairing material contains the radical-polymerizable resin composition, an organic peroxide, and a filler (Z).

EP 3 858 880 A1

## Description

### Technical Field

The present invention relates to a radical-polymerizable resin composition and a structure repairing material containing it.

### Background Art

Recently, concrete structures have become extremely degraded owing to influences of neutralization or salt damage and have been in need for repairing. Especially in cold regions, cracking may occur owing to freezing and thawing of water contained in concrete, and by chlorides such as calcium chloride and sodium chloride used as a snow-melting chemical, degradation of concrete is further promoted. Consequently, in cold regions, concrete structures need to be repaired frequently.

As one repairing method for concrete structures, there is known a method injecting an injection material into cracks of concrete structures. As the injection material, in general, those containing an epoxy resin are used.

However, an epoxy resin tends to have an extremely lowered curing speed in low-temperature environments. In addition, the injection material using an epoxy resin may have an extremely increased viscosity in low temperature environments, and is therefore problematic in workability in injecting the injection material into the depth of cracks.

Regarding a cold curable repairing material, PTL 1 describes a composition containing a radical-polymerizable resin composition, a hydroxy group-containing aromatic tertiary amine, an organic peroxide and an inorganic filler. The radical-polymerizable resin composition contains at least one radical-polymerizable resin of a vinyl ester resin, an urethane (meth)acrylate resin and a polyester (meth)acrylate resin, and a radical-polymerizable unsaturated monomer having 2 or more (meth)acryloyl groups in the molecule.

PTL 2 describes a resin composition containing a resin component, an aromatic tertiary amine, and an organic peroxide. This discloses that the resin component contains at least one radical-reactive resin of a vinyl ester resin, a urethane (meth)acrylate resin, and a polyester (meth)acrylate, and a radical-polymerizable unsaturated monomer having a (meth)acryloyloxy group in the molecule.

### Citation List

#### Patent Literature

PTL 1: WO2016/133094
PTL 2: JP 2017-214441 A

### Summary of Invention

#### Technical Problem

The radical-polymerizable resin composition described in PTL 1 uses, as mentioned above, a radical-polymerizable unsaturated monomer having 2 or more (meth)acryloyl groups in the molecule and achieves a high compression strength. However, though VE5 and VE6 in the section of Examples given hereunder each contain a large amount of diethylene glycol dimethacrylate as a radical-polymerizable monomer (B), there is still a room for improvement in point of linear shrinkage, that is, shrinkage by curing, as known from Comparative Example 5 and Comparative Example 6 using these.

Regarding the resin composition described in PTL 2, for example, a mixture of a resin component, an aromatic tertiary amine (C) and an organic peroxide (D) in Example 1 in PTL 2 corresponds to a mixture of a resin composition (X) and an organic peroxide in Comparative Example 1 and Comparative Example 3 given hereunder, and Example 2 in PTL 2 corresponds to Comparative Example 2 and Comparative Example 4 also given hereunder. With that, Comparative Examples 1 to 4 referred to herein still have a room for improvement in point of the compression strength at -10°C, as described hereunder.

Accordingly, an object of the present invention is to provide a radical-polymerizable resin composition and a structure repairing material which, when used in repairing concrete structures, enable construction working even in low-temperature environments, secure high strength, and low shrinkage by curing, and prevent cracking.

Solution to Problem

To attain the above-mentioned object, the constitution of the present invention is as follows.

[1] A radical-polymerizable resin composition comprising:

a radical-polymerizable resin (A) containing at least one selected from the group consisting of a vinyl ester resin, an urethane (meth)acrylate resin, and a polyester (meth)acrylate resin,
a radical-polymerizable monomer (B) containing an isobornyl group-having unsaturated compound (B1), and
a hydroxy group-containing aromatic tertiary amine (C) represented by the following general formula (I),
and containing the radical-polymerizable resin (A) and the radical-polymerizable monomer (B) in a total amount of 75% by mass or more.

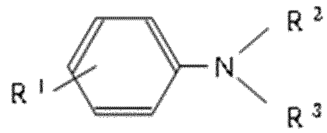
(I)

In the general formula (I), $R^1$ represents H, $CH_3$ or $OCH_3$, $R^2$ represents a hydroxyalkyl group having 1 to 10 carbon atoms, $R^3$ represents an alkyl group having 1 to 10 carbon atoms, or a hydroxyalkyl group having 1 to 10 carbon atoms.

[2] The radical-polymerizable resin composition according to the above [1], wherein the isobornyl group-having unsaturated compound (B1) contains an ethylenically-unsaturated bond.

[3] The radical-polymerizable resin composition according to the above [2], wherein the isobornyl group-having unsaturated compound (B1) is an isobornyl (meth)acrylate.

[4] The radical-polymerizable resin composition according to any of the above [1] to [3], wherein the content ratio of the isobornyl group-having unsaturated compound (B1) relative to the total amount of the radical-polymerizable resin (A) and the radical-polymerizable monomer (B) is 10% by mass or more and 65% by mass or less.

[5] The radical-polymerizable resin composition according to any of the above [1] to [4], wherein the content ratio of the isobornyl group-having unsaturated compound (B1) in the radical-polymerizable monomer (B) is 30% by mass or more and 90% by mass or less.

[6] The radical-polymerizable resin composition according to any of the above [1] to [5], wherein the other radical-polymerizable monomer (B2) than the isobornyl group-having unsaturated compound (B1) in the radical-polymerizable monomer (B) contains at least one selected from the group consisting of a mono(meth)acrylate, a di(meth)acrylate and a tri(meth)acrylate.

[7] The radical-polymerizable resin composition according to any of the above [1] to [6], wherein the other radical-polymerizable monomer (B2) than the isobornyl group-having unsaturated compound (B1) in the radical-polymerizable monomer (B) contains at least one selected from the group consisting of dicyclopentenyloxyethyl (meth)acrylate, (meth)acryloylmorpholine, ethylene glycol di(meth)acrylate, diethylene glycol di(meth)acrylate, and trimethylolpropane tri(meth)acrylate.

[8] The radical-polymerizable resin composition according to any of the above [1] to [7], wherein, in the general formula (I), $R^3$ is a hydroxyalkyl group having 1 to 10 carbon atoms.

[9] The radical-polymerizable resin composition according to any of the above [1] to [8], wherein the content ratio of the hydroxy group-containing aromatic tertiary amine (C) is 0.1 to 10% by mass.

[10] The radical-polymerizable resin composition according to any of the above [1] to [9], wherein the radical-polymerizable resin (A) contains a vinyl ester resin.

[11] The radical-polymerizable resin composition according to any of the above [1] to [10], further containing, as an

additive component, at least one selected from a wax, any other amine than the hydroxy group-containing aromatic tertiary amine (C), a solvent, a polymerization inhibitor, a coupling agent, a curing accelerator, and an antioxidant.

[12] A structure repairing material containing a radical-polymerizable resin composition (X) of any of the above [1] to [11], an organic peroxide (Y) and a filler (Z).

[13] The structure repairing material according to the above [12], wherein the filler (Z) contains at least one selected from the group consisting of an inorganic thixotropic agent, an organic compound fiber, calcium carbonate, cement, silica sand, and silica stone.

[14] The structure repairing material according to the above [12] or [13], wherein the content of the filler (Z) relative to 100 parts by mass of the radical-polymerizable resin composition (X) is 100 to 700 parts by mass.

[15] The structure repairing material according to any of the above [12] to [14], wherein the content of the organic peroxide (Y) relative to 100 parts by mass of the radical-polymerizable resin composition (X) is 0.1 parts by mass or more and 10 parts by mass or less.

## Advantageous Effects of Invention

According to the present invention, there can be provided a radical-polymerizable resin composition and a structure repairing material which, when used in repairing concrete structures, enable construction working even in low-temperature environments, secure high strength, and low shrinkage by curing, and prevent cracking.

## Brief Description of Drawing

Fig. 1 is a flowchart showing one example of a structure repairing method using a structure repairing material of the present invention.

## Description of Embodiments

Embodiments of the present invention are described in detail hereinunder.

"Curing" means formation of a network-structure polymer through bonding by chemical reaction of molecules contained in a raw material. "Drying" means evaporation of a part of components contained in a mixture or a composition not accompanied by chemical reaction. Curing and drying may occur and run on simultaneously and, for example, a component not undergoing chemical reaction, or a component formed through chemical reaction may evaporate with progression of curing.

"(Meth)acrylate" means acrylate or methacrylate; "(meth)acryl" means acryl or methacryl; and "(meth)acryloyl" means acryloyl or methacryloyl.

"Radical-polymerizable" means a property of a component contained in a composition to cure through radical polymerization under certain conditions, and examples of curing conditions include heating, and irradiation with light. "Radical-polymerizable component" is a compound having radical polymerizability, and examples thereof include the radical-polymerizable resin (A) and the radical-polymerizable monomer (B) to be mentioned hereinunder. Namely, the amount of the "radical-polymerizable component" means a total amount of the radical-polymerizable resin (A) and the radical-polymerizable monomer (B).

"Ethylenically-unsaturated bond" means a double bond between carbon atoms except carbon atoms that form an aromatic ring.

"Laitance layer" means a porous and brittle muddy film layer formed through precipitation of a component contained in concrete, on the surface of concrete.

### <1. Structure Repairing Material>

The structure repairing material of this embodiment contains a radical-polymerizable resin composition (X), an organic peroxide (Y) and a filler (Z). Hereinunder these components contained in the structure repairing material of this embodiment are described individually.

### <1-1. Radical-Polymerizable Resin Composition (X)>

The radical-polymerizable resin composition (X) (hereinunder this may be simply referred to as resin composition

(X)) contains a radical-polymerizable resin (A), a radical-polymerizable monomer (B) containing an isobornyl group-having unsaturated compound (B1), and a hydroxy group-containing aromatic tertiary mine (C) represented by the following general formula (I).

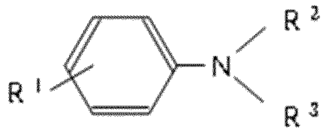

(I)

In the general formula (I), $R^1$ represents H, $CH_3$ or $OCH_3$, $R^2$ represents a hydroxyalkyl group having 1 to 10 carbon atoms, and $R^3$ represents an alkyl group having 1 to 10 carbon atoms, or a hydroxyalkyl group having 1 to 10 carbon atoms.

In the resin composition (X), the total content ratio of the radical-polymerizable resin (A) and the radical-polymerizable monomer (B) (the content ratio of the radical-polymerizable components) is 75% by mass or more, preferably 85% by mass or more, more preferably 95% by mass or more. Preferably, the resin composition (X) does not contain a component corresponding to the filler (Z) to be mentioned hereinunder.

< 1-1-1. Radical-Polymerizable Resin (A)>

The radical-polymerizable resin (A) contains at least one selected from the group consisting of a vinyl ester resin, a urethane (meth)acrylate resin and a polyester (meth)acrylate resin. Preferably, the radical-polymerizable resin (A) contains a vinyl ester resin and is more preferably a vinyl ester resin. Hereinunder the vinyl ester resin, the urethane (meth)acrylate resin and the polyester (meth)acrylate resin usable as the radical-polymerizable resin (A) are described individually.

<1-1-1(a). Vinyl Ester Resin>

The vinyl ester resin may be called an epoxy (meth)acrylate resin, and for example, it is an esterified product of an epoxy compound and a carboxylic acid having one or plural ethylenically-unsaturated bonds or a derivative thereof. The carboxylic acid derivative includes a carboxylic acid halide, and a carboxylic acid anhydride. Namely, the vinyl ester resin is an epoxy compound polymer having an ethylenically-unsaturated bond bonding to at least any terminal of an epoxy polymer via an ester bond. Here, preferably, the ethylenically-unsaturated bond is at the terminal of the molecule, and is more preferably a vinyl group, an allyl group, a (meth)acryloyl group or a (meth)acryloyloxy group. Examples of such vinyl ester resins are described in "Polyester Resin Handbook (issued by Nikkan Kogyo Shimbun, Ltd, in 1988)", and "Dictionary of Paint Terms (edited by Japan Society of Color Material, issued in 1993)".

The epoxy compound used as a raw material for the vinyl ester resin is preferably a diepoxy compound, and examples thereof include a bisphenol A-type glycidyl ether and a novolak-type glycidyl ether. More specifically, the epoxy compound includes bisphenol A diglycidyl ether, hydrogenated bisphenol A diglycidyl ether, tetrabromobisphenol A diglycidyl ether, novolak-type diglycidyl ether, and cresol novolak-type diglycidyl ether. Other epoxy compounds include 1,6-hexanediol diglycidyl ether, 1,4-cyclohexanedimethanol diglycidyl ether, 5-norbornane-2,3-dimethanol diglycidyl ether, tricyclodecane dimethanol diglycidyl ether, alicyclic diepoxy carbonate, alicyclic diepoxy acetal, and alicyclic diepoxy carboxylate.

One alone or two or more kinds of these epoxy compounds may be used either singly or as mixed, but preferably, bisphenol A diglycidyl ether and a linear diglycidyl ether are mixed and used. This is for improving the flexibility and the toughness of the cured structure repairing material. From this viewpoint, the epoxy compound is more preferably a mixture of bisphenol A diglycidyl ether and 1,6-hexanediol diglycidyl ether.

In the ethylenically-unsaturated bond-having carboxylic acid used as a raw material for the vinyl ester resin, preferably, two hydrogen atoms bond to one carbon atom that forms the ethylenically-unsaturated bond, that is, the ethylenically-unsaturated bond is at the terminal of the molecule, and more preferably, the ethylenically-unsaturated bond forms a vinyl group or an allyl group.

Examples of the monocarboxylic acid having one ethylenically-unsaturated bond include acrylic acid and methacrylic acid. Examples of the monocarboxylic acid having plural ethylenically-unsaturated bonds include half ester carboxylic acids to be produced through reaction of trimethylolpropane diallyl ether and phthalic anhydride or a derivative thereof. Examples of the derivative of phthalic anhydride include tetrahydrophthalic anhydride, methyl-tetrahydrophthalic anhydride, and endomethylene-tetrahydrophthalic anhydride. A tetrahydrophthalic anhydride is preferred. One alone or two or more kinds of these carboxylic acids may be used either singly or as mixed.

The ethylenically-unsaturated bond-having carboxylic acid may also be a dicarboxylic acid. The ethylenically-unsaturated bond-having dicarboxylic acid includes an esterified product produced by reacting one carboxy group of a tricarboxylic acid such as citric acid with a compound having an ethylenically-unsaturated bond and a hydroxy group such as trimethylolpropane diallyl ether.

In the case where an ethylenically-unsaturated bond-having carboxylic acid derivative is used in place of the ethylenically-unsaturated bond-having carboxylic acid, halides such as chlorides or bromides of the above-mentioned carboxylic acid, or anhydrides of the above-mentioned carboxylic acid may be used.

For controlling the crosslinking degree of the cured product, the vinyl ester resin may be such that a part of the terminal epoxy groups of an epoxy polymer to be a raw material are reacted with a carboxylic acid not having an ethylenically-unsaturated bond. Examples of the carboxylic acid not having an ethylenically-unsaturated bond include adipic acid, sebacic acid, and phthalic anhydride.

<1-1-1(b). Urethane (Meth)acrylate Resin>

For example, the urethane (meth)acrylate resin can be produced by reacting a polyisocyanate and a polyol to give a polyurethane having an isocyanate group at the terminal and reacting it with a hydroxy group-containing (meth)acrylate. In reacting with a hydroxy group-containing (meth)acrylate, a hydroxy group-containing allyl ether compound may be further added. Namely, the urethane (meth)acrylate resin is a polyurethane having a (meth)acryloyl group at least at any terminal in the molecule.

The method for synthesizing the urethane (meth)acrylate resin is not limited to only the above, and for example, the resin can also be produced by reacting a polyisocyanate and a polyol to give a polyurethane having a hydroxy group at the terminal and reacting it with an isocyanate-containing (meth)acrylate.

Examples of the polyisocyanate to be used as a raw material for the urethane (meth)acrylate resin include 2,4-tolylene diisocyanate, 2,6-tolylene diisocyanate, 4,4'-diphenylmethane diisocyanate, hexamethylene diisocyanate, hydrogenated xylylene diisocyanate, isophorone diisocyanate, xylylene diisocyanate, dicyclohexylmethane diisocyanate, naphthalene diisocyanate, and triphenylmethane triisocyanate, and commercial products thereof include Millionate MT (by Nippon Polyurethane Industry Co., Ltd.), Burnock D-750 (by DIC Corporation), Crisvon NK (by DIC Corporation), Desmodur L (by Sumika Covestro Urethane Co., Ltd.), Coronate L (by Tosoh Corporation), Takenate D102 (by Mitsui Chemicals Inc.), Isonate 143L (by Mitsubishi Chemical Corporation), and Duranate (registered trademark) series (by Asahi Kasei Corporation). One alone or two or more kinds of these polyisocyanates may be used either singly or as mixed. The polyisocyanates for use herein are preferably diisocyanates, and among these, 4,4'-diphenylmethane diisocyanate is more preferred from the viewpoint of cost.

Examples of the polyol to be used as a raw material for the urethane (meth)acrylate resin include ethylene glycol, diethylene glycol, triethylene glycol, polyethylene glycol, propylene glycol, dipropylene glycol, polypropylene glycol, 2-methyl-1,3-propanediol, 1,3-butanediol, bisphenol A propylene oxide adduct, bisphenol A ethylene oxide adduct, 1,2,3,4-tetrahydroxybutane, glycerin, trimethylolpropane, 1,3-butanediol, 1,2-cyclohexaneglycol, 1,3-cyclohexaneglycol, 1,4-cyclohexaneglycol, paraxyleneglycol, bicyclohexyl-4,4-diol, 2,6-decalinglycol, and 2,7-decalinglycol. The polyol also includes a polyester polyol and a polyether polyol. More specifically, the polyol includes glycerin ethylene oxide adduct, glycerin propylene oxide adduct, glycerin tetrahydrofuran adduct, glycerin ethylene oxide propylene oxide adduct, trimethylolpropane ethylene oxide adduct, trimethylolpropane propylene oxide adduct, trimethylolpropane tetrahydrofuran adduct, trimethylolpropane ethylene oxide propylene oxide adduct, dipentaerythritol ethylene oxide adduct, dipentaerythritol propylene oxide adduct, dipentaerythritol tetrahydrofuran adduct, and dipentaerythritol ethylene oxide propylene oxide adduct. One alone or two or more kinds of these polyhydroxy compounds may be used either singly or as mixed. The polyol to be used here is preferably a linear glycol, more preferably a polypropylene glycol.

Examples of the hydroxy group-containing (meth)acrylate to be used as a raw material for the urethane (meth)acrylate resin include 2-hydroxyethyl (meth)acrylate, 2-hydroxypropyl (meth)acrylate, 3-hydroxybutyl (meth)acrylate, polyethylene glycol mono(meth)acrylate, polypropylene glycol mono(meth)acrylate, tris(hydroxyethyl)isocyanuric acid di(meth)acrylate, pentaerythritol tri(meth)acrylate, and glycerin (mono)(meth)acrylate, and commercial products thereof include Blemmer (registered trademark) series (by NOF Corporation). Among these (meth)acrylates, those having one hydroxy group and one (meth)acryloyl group in the molecule, that is, 2-hydroxyethyl (meth)acrylate, 2-hydroxypropyl (meth)acrylate, and 3-hydroxybutyl (meth)acrylate are preferred, and 2-hydroxypropyl (meth)acrylate is especially preferred. One alone or two or more kinds of these hydroxy group-containing (meth)acrylates can be used either singly or as mixed.

Examples of the hydroxy group-containing allyl ether compound to be used as a raw material for the urethane (meth)acrylate resin include ethylene glycol monoallyl ether, diethylene glycol monoallyl ether, triethylene glycol monoallyl ether, polyethylene glycol monoallyl ether, propylene glycol monoallyl ether, dipropylene glycol monoallyl ether, tripropylene glycol monoallyl ether, polypropylene glycol monoallyl ether, 1,2-butylene glycol monoallyl ether, 1,3-butylene glycol monoallyl ether, hexylene glycol monoallyl ether, octylene glycol monoallyl ether, trimethylolpropane diallyl ether, glycerin diallyl ether, and pentaerythritol triallyl ether. One alone or two or more kinds of these hydroxy group-containing

allyl ether compounds may be used either singly or as mixed.

<1-1-1(c). Polyester (Meth)acrylate Resin>

The polyester (meth)acrylate resin can be produced by reacting a (meth)acrylate having a hydroxy group or an epoxy group, with a polyester having a carboxy group at the terminal that is produced, for example, from a polycarboxylic acid and a polyol. The polyester (meth)acrylate resin can also be produced by reacting a polyester having a hydroxy group at the terminal that is produced, for example, from a polycarboxylic acid and a polyol, with a (meth)acrylic acid. Namely, the polyester (meth)acrylate resin is a polyester having a (meth)acryloyl group at least at any terminal of the molecular chain.

The polycarboxylic acid to be used as a raw material for the polyester (meth)acrylate resin is preferably at least one of an aromatic dicarboxylic acid and an aliphatic saturated dicarboxylic acid, more preferably an aromatic dicarboxylic acid. Examples of the aromatic dicarboxylic acid include phthalic acid, isophthalic acid, terephthalic acid, and anhydrides thereof. Examples of the aliphatic dicarboxylic acid include adipic acid, sebacic acid, and anhydrides thereof. One alone or two or more kinds of these polycarboxylic acids may be used either singly or as mixed.

The polycarboxylic acid to be used as a raw material for the polyester (meth)acrylate resin may also include an aliphatic unsaturated dicarboxylic acid, and examples of the aliphatic unsaturated dicarboxylic acid include fumaric acid, maleic acid, itaconic acid, tetrahydrophthalic acid, and anhydrides thereof. One alone or two or more kinds of these aliphatic unsaturated dicarboxylic acids may be used either singly or as mixed.

The polycarboxylic acid be used as a raw material for the polyester (meth)acrylate resin may also include any other polycarboxylic acid than the above-mentioned dicarboxylic acids, and the dicarboxylic acid and any other polycarboxylic acid than the dicarboxylic acid can also be combined and used.

The polyol to be used as a raw material for the polyester (meth)acrylate resin is preferably a diol, and examples thereof include ethylene glycol, propylene glycol, diethylene glycol, dipropylene glycol, 1,2-butanediol, 1,3-butanediol, 1,5-pentanediol, 1,6-hexanediol, 2-methyl-1,3-propanediol, 2,2-dimethyl-1,3-propanediol, cyclohexane-1,4-dimethanol, bisphenol A ethylene oxide adduct, and bisphenol A propylene oxide adduct. One alone or two or more kinds of these polyols may be used either singly or as mixed.

The epoxy group-having (meth)acrylate to be used as a raw material for the polyester (meth)acrylate resin is preferably one not having any other unsaturated bond than an a, β-unsaturated bond, more preferably one in which the number of the epoxy group contained in the molecule is one, for example, glycidyl methacrylate.

The hydroxy group-containing (meth)acrylate to be used as a raw material for the polyester (meth)acrylate resin includes the same compounds as those exemplified hereinabove as the hydroxy group-containing (meth)acrylate for use as a raw material for the above-mentioned urethane (meth)acrylate resin, and one alone or two or more kinds thereof may be used either singly or as mixed.

Examples of the (meth)acrylic acid to be used as a raw material for the polyester (meth)acrylate resin include acrylic acid, methacrylic acid, and itaconic acid. One alone or two or more kinds of these (meth)acrylic acids may be used either singly or as mixed.

Among the polyester (meth)acrylate resins to be produced from the above-mentioned raw materials, bisphenol A-type polyester (meth)acrylate resins are preferred, from the viewpoint of enhancing the mechanical strength (compression strength, hardness) of the cured structure repairing material.

<1-1-2. Radical-Polymerizable Monomer (B)>

The radical-polymerizable monomer (B) can appropriately lower the viscosity of the resin composition (X) and the structure repairing material and can improve the strength, the chemical resistance and the waterproofness of the cured structure repairing material. The radical-polymerizable monomer (B) contains an isobornyl group-having unsaturated compound (B1) (hereinunder this may be referred to as an unsaturated compound (B1)). The radical-polymerizable monomer (B) does not contain a component corresponding to the radical-polymerizable resin (A).

The content ratio of the radical-polymerizable monomer (B) in the resin composition (X) is preferably 40% by mass or more. Falling within the range, not only the resin composition (X) can have a viscosity suitable for good workability even at a low temperature (for example, at -25°C), but also the composition can have good wettability to the filler (Z) to be mentioned below. From this viewpoint, the content ratio of the radical-polymerizable monomer (B) is more preferably 50% by mass or more, even more preferably 55% by mass or more.

The content ratio of the radical-polymerizable monomer (B) in the resin composition (X) is preferably 90% by mass or less. Falling within the range, the cured structure repairing material can maintain high strength and waterproofness. From this viewpoint, the content ratio of the radical-polymerizable monomer (B) is more preferably 80% by mass or less, even more preferably 70% by mass or less.

<1-1-2(a). Isobornyl Group-Having Unsaturated Compound (B1)>

The unsaturated compound (B1) is a compound having an isobornyl group and an ethylenically-unsaturated bond. The unsaturated compound (B1) can enhance the strength of the cured resin composition (X) not significantly increasing the shrinkage of the resin composition (X) by curing. The unsaturated compound (B1) is preferably a (meth)acrylate having an isobornyl group, more preferably isobornyl (meth)acrylate. The isobornyl group means a residue formed by removing a hydroxy group from isoborneol.

The content ratio of the unsaturated compound (B1) in the radical-polymerizable components (A) + (B) is preferably 10% by mass or more. Falling within the range, the strength of the cured repairing material increases. From this viewpoint, the content ratio of the unsaturated compound (B1) in the radical-polymerizable components (A) + (B) is more preferably 20% by mass or more, even more preferably 30% by mass or more.

Preferably, the content ratio of the unsaturated compound (B1) in the radical-polymerizable components (A) + (B) is 65% by mass or less. Falling within the range, the shrinkage of the repairing material by curing reduces. From this viewpoint, the content ratio of the unsaturated compound (B1) in the radical-polymerizable components (A) + (B) is more preferably 55% by mass or less, even more preferably 45% by mass or less.

Preferably, the content ratio of the unsaturated compound (B1) in the radical-polymerizable compound (B) is 30% by mass or more. Falling within the range, the strength of the cured repairing material increases. From this viewpoint, the content ratio of the unsaturated compound (B1) in the radical-polymerizable compound (B) is more preferably 40% by mass or more, even more preferably 50% by mass or more.

Preferably, the content ratio of the unsaturated compound (B1) in the radical-polymerizable compound (B) is 90% by mass or less. Falling within the range, the shrinkage of the repairing material by curing reduces. From this viewpoint, the content ratio of the unsaturated compound (B1) in the radical-polymerizable compound (B) is more preferably 80% by mass or less, even more preferably 70% by mass or less.

<1-1-2(b). Other Radical-Polymerizable Monomer (B2)>

The radical-polymerizable monomer (B) may contain any other radical-polymerizable monomer (B2) in addition to the unsaturated compound (B1). The other radical-polymerizable monomer (B2) contains an ethylenically-unsaturated bond. The other radical-polymerizable monomer (B2) includes unsaturated carboxylates, unsaturated dicarboxylic acid monoesters, styrene, $\alpha$-methylstyrene, aromatic vinyl compounds, and glycidyl (meth)acrylate. Preferably, the other radical-polymerizable monomer (B2) contains a (meth)acrylate, and more preferably contains at least one selected from the group consisting of mono(meth)acrylates, di(meth)acrylates and tri(meth)acrylates.

The mono(meth)acrylate is not specifically limited. Examples thereof include methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, amyl (meth)acrylate, hexyl (meth)acrylate, heptyl (meth)acrylate, 2-ethylhexyl (meth)acrylate, n-octyl (meth)acrylate, isooctyl (meth)acrylate, n-nonyl (meth)acrylate, isononyl (meth)acrylate, decyl (meth)acrylate, dodecyl (meth)acrylate, n-lauryl (meth)acrylate, tridecyl (meth)acrylate, stearyl (meth)acrylate, cyclohexyl (meth)acrylate, cyclopentyl (meth)acrylate, benzyl (meth)acrylate, dicyclopentenyl (meth)acrylate, dicyclopentenyloxyethyl (meth)acrylate, methoxyethyl (meth)acrylate, ethoxyethyl (meth)acrylate, butoxyethyl (meth)acrylate, phenoxyethyl (meth)acrylate, tetrahydrofurfuryl (meth)acrylate, 2-hydroxyethyl (meth)acrylate, 2-hydroxypropyl (meth)acrylate, and 4-hydroxybutyl (meth)acrylate. One alone or two or more kinds of these (meth)acrylate monomers may be used either singly or as mixed.

The di(meth)acrylate is not specifically limited. Examples thereof include ethylene glycol di(meth)acrylate, diethylene glycol di(meth)acrylate, triethylene glycol di(meth)acrylate, polyoxyethylene glycol di(meth)acrylate, propylene glycol di(meth)acrylate, dipropylene glycol di(meth)acrylate, tripropylene glycol di(meth)acrylate, polypropylene glycol di(meth)acrylate, ethoxylated bisphenol A di(meth)acrylate, tricyclodecane di(meth)acrylate, 1,10-decanediol di(meth)acrylate, 1,4-butanediol di(meth)acrylate, 1,6-hexanediol di(meth)acrylate, 1,9-nonanediol di(meth)acrylate, neopentyl glycol di(meth)acrylate, glycerin di(meth)acrylate, ethoxylated polypropylene glycol di(meth)acrylate, 2,2-bis[4-(methacryloyloxyethoxy)phenyl]propane, 2,2-bis[4-(methacryloyloxy-diethoxy)phenyl]propane, 2,2-bis[4-(methacryloyloxy-polyethoxy)phenyl]propane, 2,2-bis[4-(acryloyloxy-diethoxy)phenyl]propane, and 2,2-bis[4-(acryloyloxy-polyethoxy)phenyl]propane.

The tri(meth)acrylate is not specifically limited, including trimethylolpropane tri(meth)acrylate, ethoxylated isocyanuric acid tri(meth)acrylate, $\varepsilon$-caprolactone-modified tris(2-acryloyloxyethyl) isocyanurate, and pentaerythritol tri(meth)acrylate.

From the viewpoint of workability and compression strength, the other radical-polymerizable monomer (B2) preferably contains at least one selected from the group consisting of dicyclopentenyloxyethyl (meth)acrylate, (meth)acryloylmorpholine, ethylene glycol di(meth)acrylate, diethylene glycol di(meth)acrylate, and trimethylolpropane tri(meth)acrylate.

In addition to the above, dimethylolpropane tetra(meth)acrylate, ethoxylated pentaerythritol tetra(meth)acrylate,

dipentaerythritol poly(meth)acrylate, and dipentaerythritol hexa(meth)acrylate can also be used as the other radical-polymerizable monomer (B2), within a range capable of attaining the object of the present invention.

[1-1-3. Hydroxyl Group-Containing Aromatic Tertiary Amine (C)]

The hydroxy group-containing aromatic tertiary amine (C) is represented by the following formula (I).

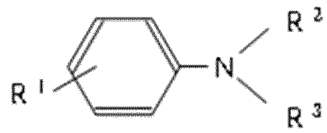

( I )

In the formula (I), $R^1$ represents H, $CH_3$ or $OCH_3$, and is preferably $CH_3$, more preferably $CH_3$ at the p-position. $R^2$ represents a hydroxyalkyl group having 1 to 10 carbon atoms and is preferably a hydroxyalkyl group having 3 or less carbon atoms. $R^3$ represents an alkyl group having 1 to 10 carbon atoms or a hydroxyalkyl group having 1 to 10 carbon atoms and is preferably an alkyl group or a hydroxyalkyl group having 4 or less carbon atoms, even more preferably a hydroxyalkyl group having 4 or less carbon atoms. Still more preferably, $R^2$ and $R^3$ are the same hydroxyalkyl group.

The hydroxy group-containing aromatic tertiary amine (C) represented by the general formula (I) is not specifically limited, and examples thereof include N-methyl-N-β-hydroxyethylaniline, N-butyl-N-β-hydroxyethylaniline, N-methyl-N-β-hydroxyethyl-p-toluidine, N-butyl-N-β-hydroxyethyl-p-toluidine, N-methyl-N-β-hydroxypropylaniline, N-methyl-N-β-hydroxypropyl-p-toluidine, N,N-di(β-hydroxyethyl)aniline, N,N-di(β-hydroxypropyl)aniline, N,N-di(β-hydroxyethyl)-p-toluidine, N,N-di(β-hydroxypropyl)p-toluidine, N,N-diisopropanol-p-toluidine, and N,N-di(β-hydroxyethyl)-p-anisidine. Among these, N,N-di(β-hydroxyethyl)-p-toluidine an N,N-di(β-hydroxypropyl)-p-toluidine are preferred from the viewpoint of low-temperature curability.

One alone or two or more kinds of these hydroxy group-containing aromatic tertiary amines (C) may be used either singly or as combined.

The content ratio of the hydroxy group-containing aromatic tertiary amine (C) in the resin composition (X) is preferably 0.1 to 10% by mass, more preferably 0.1 to 5.0% by mass, even more preferably 0.2 to 3.0% by mass. Containing the hydroxy group-containing aromatic tertiary amine (C), the curing reaction of the resin composition (X) can be promoted to improve the workability thereof.

<1-1-4. Additive Component in Resin Composition (X)>

The additive component contained in the resin composition (X) includes wax, other amines than the hydroxy group-containing aromatic tertiary amine (C) (hereinafter this may be referred to as "amine of an optional component"), solvents, polymerization inhibitors, coupling agents, curing accelerators, and antioxidants, which can be used so far as the object of the present invention can be attained.

Examples of wax include, though not limited thereto, petroleum wax (paraffin wax, microcrystalline), vegetable wax (candelilla wax, rice wax, Japan wax), animal wax (beeswax, spermaceti), mineral wax (montan wax), and synthetic wax (polyethylene wax, amide wax). More specifically, there is mentioned a paraffin wax having a melting point of 20°C to 80°C or so, and commercial products thereof include Paraffin Wax 115°F and Paraffin Wax 125°F (by Nippon Seiro Co., Ltd.), and BYK (registered trademark)-S-750, BYK (registered trademark)-S-740, and BYK (registered trademark)-S-780 (by BYK Japan KK). One alone or two or more kinds of these waxes can be used either singly or as mixed, and for example, waxes each having a different melting point can be combined and used.

In the case where the resin composition (X) contains wax, the content ratio of wax in the resin composition (X) is not specifically limited, but is preferably 0.01 to 5.0% by mass, more preferably 0.01 to 2.0% by mass. When the resin composition (X) contains wax, the drying time for the structure repairing material can be shortened.

The optional component, amine includes an aromatic tertiary amine except the hydroxy group-containing aromatic tertiary amine (C), for example, an aromatic tertiary amine not containing a hydroxy group. Examples of the optional component, amine include dimethylaniline and dimethyl-paratoluidine. One alone or two or more kinds of these may be used either singly or as combined.

In the case where the resin composition (X) contains an amine of an optional component, the content ratio of the amine of an optional component in the resin composition (X) is preferably 0.01 to 5.0% by mass, more preferably 0.1 to 3.0% by mass. Containing an amine of an optional component, polymerization of the radical-polymerizable components contained in the resin component (X) can be promoted because of decomposition of an organic peroxide (Y) to be mentioned below through contact of the peroxide with the amine of an optional component, and the surface drying performance and the curability of the structure repairing material can be thereby more enhanced.

Not specifically limited, examples of the solvent include alkyl acetates such as ethyl acetate; ethers such as tetrahydrofuran; ketones such as acetone, methyl ethyl ketone, methyl isobutyl ketone, and cyclohexanone; hydrocarbons such as benzene, toluene, xylene, octane, decane, and dodecane; petroleum solvents such as petroleum ether, petroleum naphtha, hydrogenated petroleum naphtha, and solvent naphtha; lactates such as methyl lactate, ethyl lactate and butyl lactate; and dimethylformamide, and N-methylpyrrolidone. One alone or two or more kinds of these solvents may be used either singly or as mixed.

In the case where the resin composition (X) contains a solvent, the content ratio of the solvent in the resin composition (X) is not specifically limited, but is preferably 0.1 to 10% by mass, more preferably 0.1 to 5.0% by mass. The solvent can control the viscosity of the resin composition (X) to fall within a range suitable for working, and when used along with wax, especially paraffin wax, the solvent can improve the solubility and the dispersibility of wax.

The polymerization inhibitor includes hydroquinone, methylhydroquinone, trimethylhydroquinone, tert-butyl catechol, and 2,6-di-tertiary butyl-4-methylphenol.

In the case where the resin composition (X) contains a polymerization inhibitor, the content ratio of the polymerization inhibitor in the resin composition (X) is not specifically limited, but is preferably 0.001 to 1.0% by mass, more preferably 0.005 to 0.5% by mass. The polymerization inhibitor can retard the progression of curing of the structure repairing material and can secure a working time.

The coupling agent is preferably a silane coupling agent. The silane coupling agent includes aminosilane, vinylsilane, epoxysilane and acrylsilane. One alone or two or more kinds of these coupling agents may be used either singly or as mixed.

In the case where the resin composition (X) contains a coupling agent, the content ratio of the coupling agent in the resin composition (X) is not specifically limited, but is preferably 0.01 to 10% by mass, more preferably 0.1 to 5.0% by mass. The coupling agent can enhance the strength of the structure repairing material.

Not specifically limited, the curing accelerator includes β-diketone compounds such as acetylacetone, ethyl acetoacetate, α-acetyl-γ-butyrolactone, N-pyrrolidinoacetoacetamide, and N,N-dimethylacetoacetamide. One alone or two or more of these curing accelerators may be used either singly or as mixed.

In the case where the resin composition (X) contains a curing accelerator, the content ratio of the curing accelerator in the resin composition (X) is not specifically limited, but is preferably 0.01 to 10% by mass, more preferably 0.1 to 5.0% by mass. The curing accelerator can shorten the curing time for the resin composition (X).

The resin composition (X) can still contain the polymerization catalyst used in synthesizing the radical-polymerizable resin (A), even after synthesis of the radical-polymerizable resin (A), so far as the performance of the resin composition (X) and the repairing material is not significantly impaired. Examples of the polymerization catalyst include 2,4,6-tris(dimethylaminomethyl)phenol and triphenyl phosphine.

<1-2. Organic Peroxide (Y)>

When used in combination with the hydroxy group-containing aromatic tertiary amine (C), the organic peroxide (Y) acts as a room-temperature radical polymerization initiator. Preferably, the organic peroxide (Y) is mixed with the resin composition (X) just before the structure repairing step. This is for the purpose of preventing the resin composition (X) from being cured before use of the structure repairing material.

The organic peroxide (Y) is not specifically limited, and examples thereof include those grouped in ketone peroxides, peroxyketals, hydroperoxides, diallyl peroxides, diacyl peroxides, peroxyesters, and peroxydicarbonates. More specifically, the organic peroxide includes dibenzoyl peroxide, dicumyl peroxide, diisopropyl peroxide, di-t-butyl peroxide, 1,1-bis(t-butylperoxy)-3,3,5-trimethylcyclohexane, 2,5-dimethyl- 2,5-bis(t-butylperoxy)hexyl-3,3-isopropyl hydroperoxide, t-butyl hydroperoxide, dicumyl hydroperoxide, acetyl peroxide, bis(4-t-butylcyclohexyl)peroxy dicarbonate, diisopropylperoxy dicarbonate, isobutyl peroxide, 3,3,5-trimethylhexanoyl peroxide, lauryl peroxide, benzoyl m-methylbenzoyl peroxide, m-toluoyl peroxide, methyl ethyl ketone peroxide, cumene hydroperoxide, and t-butyl peroxybenzoate. Among these, at least one selected from the group consisting of dibenzoyl peroxide, benzoyl m-methylbenzoyl peroxide, m-toluoyl peroxide, methyl ethyl ketone peroxide, cumene hydroperoxide and t-butyl peroxybenzoate is preferred.

The one-minute half-life temperature of the organic peroxide (Y) in this embodiment is preferably 80°C or higher. Falling within the range, the storability at room temperature of the organic peroxide (Y) is good. From this viewpoint, the one-minute half-life temperature of the organic peroxide (Y) is more preferably 100°C or higher, even more preferably 110°C or higher. Preferably, the one-minute half-life temperature of the organic peroxide (Y) in this embodiment is 250°C or lower. Falling within the range, the low-temperature curability of the structure repairing material is good. From this viewpoint, the one-minute half-life temperature of the organic peroxide (Y) in this embodiment is more preferably 200°C or lower, even more preferably 170°C or lower.

One alone or two or more kinds of these organic peroxides (Y) may be used either singly or as mixed. Examples of the mixture of two or more kinds thereof include a mixture of dibenzoyl peroxide and benzoyl m-methylbenzoyl peroxide and m-toluoyl peroxide, a mixture of cumene hydroperoxide and t-butyl peroxybenzoate, and a mixture of cumene

hydroperoxide and t-butyl peroxybenzoate and methyl ethyl ketone peroxide.

For sufficiently curing the resin composition (X), the amount of the organic peroxide (Y) to be added is preferably 0.1 parts by mass or more relative to 100 parts by mass of the resin composition (X), more preferably 0.5 parts by mass or more, even more preferably 1.0 part by mass or more. For cost reduction and for enhancing the strength of the cured structure repairing material, the content of the organic peroxide (Y) is preferably 10 parts by mass or less, more preferably 8.0 parts by mass or less, even more preferably 6.0 parts by mass or less.

<1-3. Filler (Z)>

The filler (B) may contain those acting as a thixotropic agent and a reinforcing material, in addition to the others acting as aggregate. Examples of the filler (Z) include an inorganic thixotropic agent, an organic compound fiber, calcium carbonate, cement, silica sand, and silica stone. Among these, the filler preferably contains at least one selected from the group consisting of an inorganic thixotropic agent, calcium carbonate, cement, silica sand, and silica stone, and from the viewpoint of cost and material availability, more preferably, the filler contains at least one selected from the group consisting of calcium carbonate, cement and silica sand, and above all, especially more preferably, the filler contains at least any of calcium carbonate and silica sand. One alone or two or more kinds of these fillers (Z) may be used either singly or as combined.

The content of the filler (Z) in the structure repairing material is preferably 100 parts by mass or more relative of 100 parts by mass of the resin composition (X). Falling within the range, the structure repairing material can be prevented from flowing and therefore can be prevented from deformation owing to the self-weight of the structure repairing material in applying to wall surfaces or ceiling surfaces, and from dropping of liquid droplets. From this viewpoint, the content of the filler (Z) is more preferably 200 parts by mass or more relative to 100 parts by mass of the resin composition (X), even more preferably 300 parts by mass or more. Here, in the case where two or more components are contained as the filler (Z), the content of the filler (Z) means the total content of all the components corresponding to the filler (Z). (The same shall apply to the description of the upper limit to follow later.)

The content of the filler (Z) in the structure repairing material is preferably 700 parts by mass or less relative of 100 parts by mass of the resin composition (X). Falling within the range, the structure repairing material is easy to handle, the workability thereof in coating is good, and the filler (Z) can be sufficiently bonded to the repaired material by curing the resin composition (X). From this viewpoint, the content of the filler (Z) is more preferably 600 parts by mass or less relative to 100 parts by mass of the resin composition (X), even more preferably 500 parts by mass or less.

Examples of the components corresponding to the filler (Z) are described below, but the filler (Z) is not limited to those mentioned below.

Regarding the thixotropic agent, examples of inorganic thixotropic agents include hydrophobic fumed silica (Cabosil TS-720 by Cabot Corporation), and hydrophilic fumed silica (Aerosil (registered trademark) 200 by Nippon Aerosil Co., Ltd.). Examples of organic thixotropic agents include polyethylene flocculent fibers ("Kemibesto" by Mitsui Chemicals, Inc.), and hydrogenated castor oil. Above all, hydrophobic silica, and hydrophilic silica, and Kemibesto are preferred. One alone or two or more kinds of these thixotropic agents can be used either singly or as mixed. Hydrophilic silica can be used together with a thixotropic aid such as BYK (registered trademark) R605 (by BYK Japan KK).

In the case where a thixotropic agent is added as the filler (Z), the amount of the thixotropic agent to be added is not specifically limited but is preferably 0.1 to 10 parts by mass relative to 100 parts by mass of the resin composition (X), more preferably 0.2 to 5.0 parts by mass. Containing a thixotropic agent, the structure repairing material can be given good thixotropic nature to improve workability.

Calcium carbonate improves the viscosity of the structure repairing material to improve the coating workability with a trowel. Preferably, calcium carbonate has a number-average particle size of 10 pm or less.

In the case where calcium carbonate is added as the filler (Z), the amount of calcium carbonate to be added is not specifically limited but is preferably 10 to 100 parts by mass relative to 100 parts by mass of the resin composition (X), more preferably 15 to 70 parts by mass.

Organic compound fibers include polyethylene flocculent fibers ("Kemibesto" by Mitsui Chemicals, Inc.). Preferably, the organic compound fibers have a length in the short side of 100 nm or more from the viewpoint of workability. The organic compound fibers can impart thixotropic nature to resin to improve coating workability with the structure repairing material and prevent dripping.

In the case where organic compound fibers are added as the filler (Z), the amount of the organic compound fibers to be added is not specifically limited but is preferably 0.1 to 10 parts by mass relative to 100 parts by mass of the resin composition (X), more preferably 0.2 to 5.0 parts by mass.

Cement improves trowel workability with the structure repairing material. Cement preferably contains Portland cement.

In the case where cement is added as the filler (Z), the amount of cement to be added is not specifically limited but is preferably 10 to 100 parts by mass relative to 100 parts by mass of the resin composition (X), more preferably 40

to 80 parts by mass.

Silica sand can impart resistance to heat to the structure repairing material and improve compression strength. Preferably, at least any of No. 4 to No. 8 silica sand is used here, more preferably at least any of No. 5 to No. 7 silica sand. Two kinds of silica sand each having a different size distribution can be used, and especially preferably, No. 5 silica sand and No. 7 silica sand are combined and used.

In the case where silica sand is added as the filler (Z), the amount of silica sand to be added is not specifically limited but is preferably 100 to 500 parts by mass relative to 100 parts by mass of the resin composition (X), more preferably 200 to 400 parts by mass. In the case where two or more kinds of silica sand each having a different size distribution are used as combined, preferably, they are used in the same amount by mass.

Not limited to the above-mentioned ones, alumina, aluminum hydroxide, aluminum and titanium are also added as the filler (Z). The amount of each component contained in the filler (Z) can be appropriately controlled depending on the formulation of the structure repairing material, the desired performance, and the effect relative to the amount of each component.

<1-4. Other Components>

The structure repairing material may contain any other component than the above, as an optional component within a range not interfering with the advantageous effects of the present invention. Examples of the optional component include, though not limited thereto, a photopolymerization initiator, a reinforcing material and various additives.

<2. Structure Repairing Method (Method of Use of Structure Repairing Material)>

Fig. 1 is a flowchart showing one example of a structure repairing method of this embodiment. The structure repairing method of this embodiment includes a structure repairing material preparing step S1, a coating step S2 of coating the structure repairing material to a structure, and a curing step S3 of curing the structure repairing material. The ambient temperature in these steps is not specifically limited, but the structure repairing material of this embodiment is suitable for use in a low -temperature environment at -10°C or lower.

In the preparing step S1, a resin composition (X), an organic peroxide (Y) and a filler (Z) are mixed to prepare a structure repairing material. The addition sequence is not specifically limited, falling within a range capable of attaining the effect of the present invention. For example, before adding the organic peroxide (Y), the filler (Z) and the resin composition (X) may be mixed. After the resin composition (X) and the organic peroxide (Y) are mixed, the filler (Z) may be added to the mixture thereof. The resin composition (X), the organic peroxide (Y) and the filler (Z) may be mixed at the same time. The order of mixing these components may be appropriately determined in consideration of the reactivity between the resin composition (X) and the organic peroxide (Y), and the physical properties such as viscosity of the resin composition (X), the organic peroxide (Y) and the filler (Z). However, for preventing progress of curing before use of the structure repairing material, preferably, the resin composition (X) and the filler (Z) are mixed before the organic peroxide (Y) is added.

In the coating step S2, the structure repairing material is applied to the surface of a structure. Preferably, stains, deposits and brittle layers such as laitance layers are previously removed from the working face of the structure. Also preferably, working faces are subjected to substrate treatment for preparing them, prior to this step. Examples of substrate treatment include a polishing treatment for roughened or dirty surfaces of structures using a disc sander, a sand blaster, a water jet, etc. Through the treatment, the adhesion strength of the cured structure repairing material to the working face can be enhanced.

The coating amount of the structure repairing material in this embodiment is preferably 5 to 30 kg/$m^2$, more preferably 10 to 25 kg/$m^2$, even more preferably 13 to 23 kg/$m^2$. Examples of the coating method in this step include, though not limited thereto, a coating method using instruments such as a trowel, a roller, a brush, or a spatula, and a spray coating or dipping method.

In the curing step S3, the structure repairing material applied to the structure is cured. The curing method is not specifically limited, for which the working face may be covered with a curing sheet and left as such for a period of time enough to cure. Here, the time and the adequate temperature in leaving as such vary depending on the components and the formulation of the resin composition (X). For example, in the case where the resin composition (X) contains a photopolymerization initiator, the curing may be promoted efficiently by irradiation with light. In this case, the wavelength range of light for irradiation can be appropriately determined depending on the components of the resin composition (X), especially the kind of the photopolymerization initiator. For confirming curing of the structure repairing material, the material may be checked for absence of finger mark by finger-touch, that is, no plastic deformation of the structure repairing material may be confirmed by finger-touch check.

Examples

Hereinunder the present invention is described in more detail with reference to Examples, but the invention is not limited to these.

<1. Synthesis of Radical-Polymerizable Resin (A)>

In a reactor equipped with a stirrer, a reflux condenser, a gas introducing tube and a thermometer, 151 g of a bisphenol A-type epoxy resin (product name "Epomik (trademark) R140P" by Mitsui Chemicals, Inc., epoxy equivalent 189), 188 g of 1,6-hexanediol diglycidyl ether (product name "SR-16" by Sakamoto Yakuhin Kogyo Co., Ltd., epoxy equivalent 157), 129 g of trimethylolpropane diallyl ether (product name "Neoallyl (trademark) T-20" by Osaka Soda Co., Ltd.), 91 g of tetrahydrophthalic anhydride (product name "Rikacid TH" by New Japan Chemical Co., Ltd.), and 145 g of dicyclopentenyloxyethyl methacrylate (B2-1) (product name "Fancryl FA-512MT" by Showa Denko Materials Co., Ltd.) were put, and heated up to 90°C. While the temperature was kept as such, 1.0 g of 2,4,6-tris(dimethylaminomethyl)phenol (product name "Seikuol TDMP" by Seiko Chemical Co., Ltd.) and 0.3 g of methylhydroquinone (by Tokyo Chemical Industry Co., Ltd.) were added, and heated up to 110°C and reacted with an air stream kept blowing therethrough. In one hour after the start of the reaction, the acid value reached 25 mgKOH/g. At that time, 120 g of methacrylic acid (by Kuraray Co., Ltd.) and 1.0 g of 2,4,6-tris(dimethylaminomethyl)phenol were added and heated up to 130°C. The acid value was measured based on the neutralization titration method described in JIS K 0070:1992, Section 3.1 (the same shall apply to acid value measurement hereinunder). In the method, a small amount (about 0.1 mL) of the reaction liquid was sampled for the measurement, and the sampled amount does not have any influence on the total amount (the same shall apply to acid value measurement hereinunder). In 4 hours after the temperature reached 130°C, the acid value was 14 mgKOH/g. At that time, the reaction was finished to give a mixture (a) containing 679 g of vinyl ester resin (A-1), 145 g of dicyclopentenyloxyethyl methacrylate (B2-1), 2.0 g of 2,4,6-tris(dimethylaminomethyl)phenol and 0.3 g of hydroquinone.

<2. Production of Radical-Polymerizable Mixture>

The mixture (a) synthesized as above, and the components shown in Table 1 were mixed to produce radical-polymerizable mixtures VE1 to VE6.

Table 1

| | | | VE1 | VE2 | VE3 | VE4 | VE5 | VE6 |
|---|---|---|---|---|---|---|---|---|
| Mixture (α) | Radical-Polymerizable Resin (A) | Vinyl Ester Resin (A-1) [g] | 679 | 679 | 679 | 679 | 679 | 679 |
| | Radical-Polymerizable Monomer (B) | Dicyclopentenyloxyethyl Methacrylate (B2-1) [g] | 145 | 145 | 145 | 145 | 145 | 145 |
| | Polymerization Catalyst | 2,4,6-Tris(dimethylaminomethyl)phenol [g] | 2 | 2 | 2 | 2 | 2 | 2 |
| | Polymerization Inhibitor | Methylhydroquinone [g] | 0.3 | 0.3 | 0.3 | 0.3 | 0.3 | 0.3 |
| Radical-Polymerizable Monomer (B) | | Isobornyl Methacrylate (B1-1) [g] | 837 | 614 | - | - | - | - |
| | | Dicyclopentenyloxyethyl Methacrylate (B2-1) [g] | 289 | 289 | 289 | 289 | 289 | 289 |
| | | Phenoxyethyl Methacrylate (B2-2) [g] | - | - | 670 | 547 | 505 | 153 |
| | | Acryloylmorpholine (B2-3) [g] | - | - | 167 | - | - | - |
| | | Diethylene Glycol Dimethacrylate (B2-4) [g] | - | - | - | 290 | 332 | 684 |
| Wax | | Paraffin Wax 125°F [g] | 1.1 | 1.1 | 1.1 | 1.1 | 1.1 | 1.1 |
| Content ratio of (B) in radical-polymerizable components (A)+(B) [mass%] | | | 65.2 | 60.7 | 65.2 | 65.2 | 65.2 | 65.2 |
| Content ratio of (B1) in (B) [mass%] | | | 65.9 | 58.6 | 0 | 0 | 0 | 0 |
| Content ratio of (B1) in radical-polymerizable components (A)+(B) [mass%] | | | 42.9 | 35.6 | 0 | 0 | 0 | 0 |

Isobornyl methacrylate (B1-1): Light Ester IB-X, by Kyoeisha Chemical Co., Ltd.
Dicyclopentenyloxyethyl methacrylate (B2-1): Fancryl FA-512MT, by Showa Denko Materials Co., Ltd.
Phenoxyethyl methacrylate (B2-2): Light Ester PO, by Kyoeisha Chemical Co., Ltd.
Acryloylmorpholine (B2-3): NK Ester A-MO, by Shin-Nakamura Chemical Co., Ltd.
Diethylene glycol dimethacrylate (B2-4): Light Ester 2EG, by Kyoeisha Chemical Co., Ltd.
Paraffin wax 125°F: by Nippon Seiro Co., Ltd.

<3. Examples and Comparative Examples>

The radical-polymerizable mixtures VE-1 to VE-6 were left to stand at - 10°C for 24 hours to make these mixtures at a temperature of -10°C, and then mixed in an environment at -10°C in the formulation and the amount shown in Table 2 for Examples 1 to 4 and Comparative Examples 1 to 6 thereby preparing structure repairing materials.

Table 2

| | | | Example 1 | Example 2 | Comparative Example 1 | Comparative Example 2 | Example 3 | Example 4 | Comparative Example 3 | Comparative Example 4 | Comparative Example 5 | Comparative Example 6 |
|---|---|---|---|---|---|---|---|---|---|---|---|---|
| Structure Repairing Material | Resin Composition (X) | VE1 [part by mass] | 100 | - | - | - | 100 | - | - | - | - | - |
| | | VE2 [part by mass] | - | 100 | - | - | - | 100 | - | - | - | - |
| | | VE3 [part by mass] | - | - | 100 | - | - | - | 100 | - | - | - |
| | | VE4 [part by mass] | - | - | - | 100 | - | - | - | 100 | - | - |
| | | VE5 [part by mass] | - | - | - | - | - | - | - | - | 100 | - |
| | | VE6 [part by mass] | - | - | - | - | - | - | - | - | - | 100 |
| | | Aromatic Tertiary Amine (C): N,N-Di-(β-hydroxyethyl)-p-toluidine (C-1) [part by mass] | 1.0 | 1.0 | 1.0 | 1.0 | 1.0 | 1.0 | 1.0 | 1.0 | 1.0 | 1.0 |
| | | Content ratio of radical-polymerizable components (A)+(B) in resin composition (X) [mass%] | 98.8 | 98.8 | 98.8 | 98.8 | 98.8 | 98.8 | 98.8 | 98.8 | 98.8 | 98.8 |
| | | Content ratio of radical-polymerizable monomer (B) in resin composition (X) [mass%] | 64.4 | 60.0 | 64.4 | 64.4 | 64.4 | 60.0 | 64.4 | 64.4 | 64.4 | 64.4 |
| | | Content ratio of aromatic tertiary amine (C) in resin composition (X) [mass%] | 0.99 | 0.99 | 0.99 | 0.99 | 0.99 | 0.99 | 0.99 | 0.99 | 0.99 | 0.99 |
| | Organic Peroxide (Y) | Nyper BMT-M (Y-1) [part by mass] | 5.0 | 5.0 | 5.0 | 5.0 | - | - | - | - | - | - |
| | | Nyper NS (Y-2) [part by mass] | - | - | - | - | 5.0 | 5.0 | 5.0 | 5.0 | 5.0 | 5.0 |
| | Filler (Z) | Inorganic Thixotropic Agent (Z-1) [part by mass] | 4.0 | 4.0 | 4.0 | 4.0 | - | - | - | - | - | - |
| | | Organic Compound Fibers (Z-2) [ part by mass] | - | - | - | - | 3.0 | 3.0 | 3.0 | 3.0 | 3.0 | 3.0 |
| | | Calcium Carbonate (Z-3) [ part by mass] | 55 | 55 | 55 | 55 | 22 | 22 | 22 | 22 | 22 | 22 |
| | | Portland Cement (Z-4) [ part by mass] | - | - | - | - | 60 | 60 | 60 | 60 | 60 | 60 |
| | | No. 7 Silica Sand (Z-5) [ part by mass] | 170 | 170 | 170 | 170 | 145 | 145 | 145 | 145 | 145 | 145 |
| | | No. 5 Silica Sand (Z-6) [ part by mass] | 170 | 170 | 170 | 170 | 170 | 170 | 170 | 170 | 170 | 170 |
| Evaluation Results | | -10°C Curability | Excellent | Excellent | Excellent | Excellent | Excellent | Excellent | Excellent | Excellent | Excellent | Excellent |
| | | -10°C Compression Strength [MPa] | 45 | 40 | 25 | 32 | 50 | 45 | 27 | 35 | 65 | 80 |
| | | Linear Shrinkage [%] | 0.10 | 0.05 | 0.04 | 0.13 | 0.08 | 0.06 | 0.02 | 0.10 | 0.31 | 0.65 |
| | | Cracking | no | no | no | no | no | no | no | no | cracked | cracked |

In the above Table, the resin composition (X) was used in an amount of 101 parts by mass, and therefore, the value shown in the Table for the amount of the organic peroxide (Y) and the filler (Z) is multiplied by (100/101) to indicate the amount thereof relative to 100 parts by mass of the resin composition (X).

N,N-Di(β-hydroxyethyl)-p-toluidine (C-1): PT-2HE by MORIN Chemical Industries Co., Ltd.

Nyper BMT-M (Y-1): by NOF Corporation, dibenzoylperoxide/benzoyl-m-methylbenzoyl peroxide/m-toluoyl peroxide (peroxide 50 mass%)

Nyper NS (Y-2): by NOF Corporation, dibenzoyl peroxide 40 mass%

Inorganic Thixotropic Agent (Z-1): AEROSIL 200, by Nippon Aerosil Co., Ltd.

Organic Compound Fibers (Z-2): Kemibesto, by Mitsui Chemicals Inc.

Calcium Carbonate (Z-3): Escaron 100 (number-average particle size 5.0 μm), by Sankyo Seifun Co., Ltd.

Portland Cement (Z-4): Portland Cement, by Ube Mitsubishi Cement Corporation

Silica Sand (Z-5), (Z-6): Nippyou Silica Sand, by Nippyou Kougyou Co., Ltd.

<4. Evaluation Methods>

The structure repairing materials produced in Examples 1 to 4 and Comparative Examples 1 to 6 were evaluated as follows.

<4-1. -10°C Curability>

A concrete plate from which laitance layers had been removed was cured in a -10°C atmosphere for 24 hours. Subsequently, using a metal trowel, the structure repairing material having the formulation shown in Table 2 was applied to the concrete plate to have a coating thickness of 10 mm under the same temperature condition. Subsequently, the concrete plate coated with the structure repairing material was left to stand at -10°C, and after 6 hours and 12 hours from completion of coating the structure repairing material, the structure repairing material was checked for curing. In the case where the structure repairing material was judged to have been cured after 6 hours, it is unnecessary to further check for curing after 12 hours, and therefore the checking was omitted. For confirming curing of the structure repairing material, the material was checked for absence of finger mark by finger-touch, that is, no plastic deformation of the structure repairing material was confirmed by finger-touch check. The structure repairing material confirmed to have been cured after 6 hours from completion of coating the structure repairing material was evaluated as "excellent", the structure repairing material confirmed to have been cured for the first time after 12 hours from completion of coating was evaluated as "good", and the structure repairing material not confirmed to have been cured after 12 hours was evaluated as "poor". The evaluation results of -10°C curability of the structure repairing materials of Examples and Comparative Examples are as shown in Table 2.

<4-2. -10°C Compression Strength>

According to the method described in JIS A 1181:2005 "Resin Concrete Test Method", Section 7.1 "Compression Strength, Static Elastic Coefficient and Molding of Samples for Water Absorption Test", samples for evaluation of -10°C compression strength were produced in Examples and Comparative Examples. Specifically, the structure repairing material was charged in a stainless formwork in a -10°C atmosphere, and the structure repairing material thus charged in the formwork was cured in a -10°C atmosphere for 24 hours, and then demolded to give a columnar sample having a diameter of 75 mm and a height of 150 mm. The sample was tested according to the above-mentioned test method, Section 8.1 "Compression Strength Test with Columnar Sample" to measure the compression strength [MPa] at -10°C. The evaluation results of the -10°C compression strength of the structure repairing materials of Examples and Comparative Examples are as shown in Table 2.

<4-3. Linear Shrinkage>

The structure repairing material of Examples and Comparative Examples was cast into a mold having a cuboid cavity of 60 mm in width, 60 mm in height and 240 mm in length, in a -10°C atmosphere, then cured in a -10°C atmosphere for 24 hours, and demolded, and the dimension of the cured structure repairing material was measured. From the length of the cured molded product relative to the dimension (mold dimension) of the cavity of the mold, 240 mm, the linear shrinkage was calculated according to the following math formula.

$$\text{Linear Shrinkage [\%]} = 100 \times (\text{length of cured molded product [mm]} - \text{mold dimension [mm]})/\text{mold dimension [mm]}$$

The evaluation results of the linear shrinkage of the structure repairing materials of Examples and Comparative Examples are as shown in Table 2.

<4-4. Cracking Evaluation>

From a flat concrete plate of 60 mm × 300 mm × 300 mm described in JIS A 5371:2016, laitance layers were removed, and the plate was cured in a -10°C atmosphere for 24 hours. Subsequently, using a metal trowel, the structure repairing material of Examples and Comparative Examples was applied to the flat concrete plate under the same temperature condition in a thickness of 30 mm. In 24 hours after the coating, the surface of the flat concrete plate on the side opposite to the side thereof coated with the structure repairing material was checked for cracking, and the flat concrete plate with no cracking was evaluated as "no", and the flat concrete plate with cracking was evaluated as

"cracked". The cracking evaluation results are as shown in Table 2.

<5. Evaluation Results>

As in Table 2, all the structure repairing materials of Examples 1 to 4 had good curability at - 10°C, had a high compression strength at - 10°C, had a low linear shrinkage by curing, and did not cure.

In Comparative Examples 1 and 3 not containing isobornyl methacrylate (B1-1) but containing phenoxyethyl methacrylate (B2-2) and acryloylmorpholine (B2-3) as the radical-polymerizable monomer (B), the compression strength at - 10°C was low.

In Comparative Examples 2 and 4 to 6 not containing isobornyl methacrylate (B1-1) but containing phenoxyethyl methacrylate (B2-2) and diethylene glycol dimethacrylate (B2-4) as the radical-polymerizable monomer (B), the linear shrinkage by curing was high. Further, in Comparative Examples 5 and 6 containing a large amount of diethylene glycol dimethacrylate (B2-4), cracking occurred.

As in the above, when the structure repairing material of the present invention is used for repairing concrete structures, construction working is possible even in a low-temperature environment, a high strength can be achieved, a shrinkage by curing is low, and cracking can be prevented.

## Claims

1. A radical-polymerizable resin composition comprising:

   a radical-polymerizable resin (A) containing at least one selected from the group consisting of a vinyl ester resin, a urethane (meth)acrylate resin, and a polyester (meth)acrylate resin,
   a radical-polymerizable monomer (B) containing an isobornyl group-having unsaturated compound (B1), and
   a hydroxy group-containing aromatic tertiary amine (C) represented by the following general formula (I),
   and containing the radical-polymerizable resin (A) and the radical-polymerizable monomer (B) in a total amount of 75% by mass or more:

   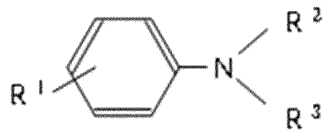 (I)

   wherein $R^1$ represents H, $CH_3$ or $OCH_3$, $R^2$ represents a hydroxyalkyl group having 1 to 10 carbon atoms, and $R^3$ represents an alkyl group having 1 to 10 carbon atoms, or a hydroxyalkyl group having 1 to 10 carbon atoms.

2. The radical-polymerizable resin composition according to claim 1, wherein the isobornyl group-having unsaturated compound (B1) contains an ethylenically-unsaturated bond.

3. The radical-polymerizable resin composition according to claim 2, wherein the isobornyl group-having unsaturated compound (B1) is an isobornyl (meth)acrylate.

4. The radical-polymerizable resin composition according to any one of claims 1 to 3, wherein the content ratio of the isobornyl group-having unsaturated compound (B1) relative to the total amount of the radical-polymerizable resin (A) and the radical-polymerizable monomer (B) is 10% by mass or more and 65% by mass or less.

5. The radical-polymerizable resin composition according to any one of claims 1 to 4, wherein the content ratio of the isobornyl group-having unsaturated compound (B1) in the radical-polymerizable monomer (B) is 30% by mass or more and 90% by mass or less.

6. The radical-polymerizable resin composition according to any one of claims 1 to 5, wherein the other radical-polymerizable monomer (B2) than the isobornyl group-having unsaturated compound (B1) in the radical-polymerizable monomer (B) contains at least one selected from the group consisting of a mono(meth)acrylate, a di(meth)acrylate and a tri(meth)acrylate.

7. The radical-polymerizable resin composition according to any one of claims 1 to 6, wherein the other radical-polymerizable monomer (B2) than the isobornyl group-having unsaturated compound (B1) in the radical-polymerizable monomer (B) contains at least one selected from the group consisting of dicyclopentenyloxyethyl (meth)acrylate, (meth)acryloylmorpholine, ethylene glycol di(meth)acrylate, diethylene glycol di(meth)acrylate, and trimethylolpropane tri(meth)acrylate.

**8.** The radical-polymerizable resin composition according to any one of claims 1 to 7, wherein, in the general formula (I), $R^3$ is a hydroxyalkyl group having 1 to 10 carbon atoms.

**9.** The radical-polymerizable resin composition according to any one of claims 1 to 8, wherein the content ratio of the hydroxy group-containing aromatic tertiary amine (C) is 0.1 to 10% by mass.

**10.** The radical-polymerizable resin composition according to any one of claims 1 to 9, wherein the radical-polymerizable resin (A) contains a vinyl ester resin.

**11.** The radical-polymerizable resin composition according to any one of claims 1 to 10, further containing, as an additive component, at least one selected from a wax, any other amine than the hydroxy group-containing aromatic tertiary amine (C), a solvent, a polymerization inhibitor, a coupling agent, a curing accelerator, and an antioxidant.

**12.** A structure repairing material comprising a radical-polymerizable resin composition (X) of any one of claims 1 to 11, an organic peroxide (Y) and a filler (Z).

**13.** The structure repairing material according to claim 12, wherein the filler (Z) contains at least one selected from the group consisting of an inorganic thixotropic agent, an organic compound fiber, calcium carbonate, cement, silica sand, and silica stone.

**14.** The structure repairing material according to claim 12 or 13, wherein the content of the filler (Z) relative to 100 parts by mass of the radical-polymerizable resin composition (X) is 100 to 700 parts by mass.

**15.** The structure repairing material according to any one of claims 12 to 14, wherein the content of the organic peroxide (Y) relative to 100 parts by mass of the radical-polymerizable resin composition (X) is 0.1 parts by mass or more and 10 parts by mass or less.

[Fig. 1]

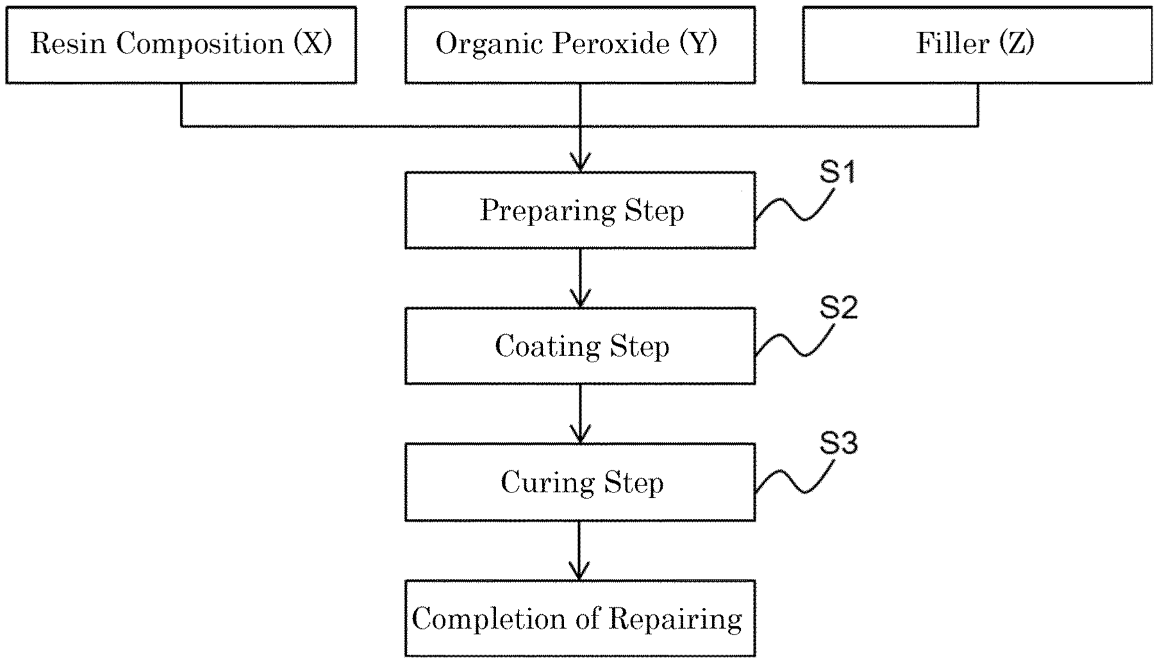
Resin Composition (X)
Organic Peroxide (Y)
Filler (Z)
Preparing Step
S1
Coating Step
S2
Curing Step
S3
Completion of Repairing

## INTERNATIONAL SEARCH REPORT

International application No. PCT/JP2019/032364

A. CLASSIFICATION OF SUBJECT MATTER
Int.Cl. C08F290/06(2006.01)i, E04G23/02(2006.01)i

According to International Patent Classification (IPC) or to both national classification and IPC

B. FIELDS SEARCHED

Minimum documentation searched (classification system followed by classification symbols)
Int.Cl. C08F290/00-290/14, C08F299/00-299/08, E04G23/00-23/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2016/133094 A1 (SHOWA DENKO KK) 25 August 2016, claims, paragraphs [0006], [0037], [0038], [0053], [0055], examples & US 2018/0002562 A1, claims, paragraphs [0009], [0062]-[0066], [0090]-[0092], [0095], [0096], examples & CN 107207681 A & KR 10-2017-0120581 A | 1-15 |
| Y | WO 2009/147953 A1 (SHOWA HIGHPOLYMER CO., LTD.) 10 December 2009, claims, paragraphs [0006], [0011], [0023], [0025], [0039]-[0049] (Family: none) | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31.10.2019 | 19.11.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/032364

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2016-525163 A (HILTI AG) 22 August 2016, claims, paragraphs [0063], [0064], [0072], [0081], [0082], [0089], [0101] & US 2016/0152754 A1, claims, paragraphs [0067], [0068], [0076], [0085], [0086], [0093], [0106] & WO 2015/004175 A1 & CN 105358646 A | 1-15 |
| Y | JP 9-137080 A (ELF ATOCHEM S.A.) 27 May 1997, claims, paragraphs [0014], [0015] & US 6242549 B1, claims, column 4, lines 14-38 & KR 10-1996-0037604 A & CN 1145916 A | 1-15 |
| Y | JP 2012-219110 A (BRIDGESTONE CORPORATION) 12 November 2012, claims, paragraphs [0009], [0015], [0018] (Family: none) | 1-15 |
| Y | JP 5-186539 A (ROHM AND HAAS CO.) 27 July 1993, claims, paragraphs [0001], [0018], [0019] & US 5288807 A, claims, column 1, lines 6-17, column 4, line 61 to column 5, line 16 & CN 1068126 A & KR 10-1993-0002431 A | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016133094 A
- JP 2017214441 A


### Non-patent literature cited in the description


- Polyester Resin Handbook. Nikkan Kogyo Shimbun, Ltd, 1988
- Dictionary of Paint Terms. Japan Society of Color Material, 1993